Europäisches Patentamt

European Patent Office

Office européen des brevets

(11) Veröffentlichungsnummer: **0 134 287**
**B1**

(12) **EUROPÄISCHE PATENTSCHRIFT**

(45) Veröffentlichungstag der Patentschrift:
**17.11.88**

(51) Int. Cl.⁴: **G 06 F 15/46,** G 05 B 15/02,
G 05 D 11/13

(21) Anmeldenummer: **83108683.0**

(22) Anmeldetag: **02.09.83**

(54) **Chemikaliendosiereinrichtung für Gerbereien.**

(43) Veröffentlichungstag der Anmeldung:
**20.03.85 Patentblatt 85/12**

(45) Bekanntmachung des Hinweises auf die Patenterteilung:
**17.11.88 Patentblatt 88/46**

(84) Benannte Vertragsstaaten:
**AT BE CH DE FR GB IT LI LU NL SE**

(56) Entgegenhaltungen:
**EP - A - 0 106 098**
**US - A - 3 987 351**
**US - A - 4 353 482**
**US - A - 4 362 033**

**REGELUNGSTECHNISCHE PRAXIS, Band 25, Nr. 7, Juli 1983, Seiten 290-293, München, DE. K.F. FRÜH: "Automatisierung von Chargenprozessen mit PROVOX" Seite 291, linke Spalte, Absatz 3**
**CONTROL SCIENCE AND TECHNOLOGY FOR THE PROGRESS OF SOCIETY, PROCEEDINGS FO THE EIGHTH TRIENNIAL WORLD CONGRESS OF THE INTERNATIONAL FEDERATION OF AUTOMATIC CONTROL, Kyoto, 24.-28. August 1981, Band 5, Seiten 2881-2886, Pergamon Press, Oxford, GB N. OHASHI et al.: "Applications of a distributed computer system for batch process"**
**Advances in Instrumentation, Bd. 32, T.1, 1977, Proceedings of the I.S.A.**
**Conference Niagara Falls, Oct. 1977, Seiten 131-133**

(73) Patentinhaber: **Hüni, Hans Eduard, Gehrenstrasse 16, CH-8810 Horgen (CH)**

(72) Erfinder: **Hüni, Hans Eduard, Gehrenstrasse 16, CH-8810 Horgen (CH)**

(74) Vertreter: **Blum, Rudolf Emil Ernst et al, c/o E. Blum & Co Patentanwälte Vorderberg 11, CH-8044 Zürich (CH)**

## Beschreibung

Die Erfindung betrifft eine gewichtsgesteuerte Chemikaliendosiereinrichtung für Gerbereien zum Anschluss an mindestens ein Gerbgefäss, mit mindestens einem Mischbehälter sowie einer Gewichtsmesszelle, Dosierventilen für den Anschluss von Zufuhrleitungen aus Chemikalientanks bzw. für Wasser und mindestens einem Auslassventil, deren Funktionen mittels einer jedem Wägebehälter zugeordneten Lokalsteuerung betätigbar sind.

Bei Chemikaliendosiereinrichtungen für Gerbereien stellt sich das Problem der Automatisierung in besonderer Weise, indem der Ausrüstungsstand bestehender Gerbereien sehr unterschiedlich ist. Auch in einer einzelnen Gerberei können Gerbgefässe unterschiedlicher Funktionen in Verwendung stehen.

Andererseits stellt sich das gerbereispezifische Problem, dass bis zu 1000 verschiedene Chemikalien, zum Teil in Pulverform, zur Dosierung in Frage kommen. Nur ein kleiner Teil davon kann deshalb in Chemikalientanks zur Verfügung gehalten werden, während die restlichen manuell zudosiert werden müssen.

Bei bekannten Einrichtungen der eingangs erwähnten Art, wie sie z.B. in den Publikationen EP-A-106 098, dieses Dokument fällt unter Artikel 54(3), oder US-A-4 353 482 dargestellt sind, war es üblich, eine separate Waage zur Einwägung der einzelnen Komponenten vor der Zugabe zum Mischbehälter vorzusehen. Flüssige Zuschlagsstoffe wurden in einem Durchflussmesser dosiert und dann mittels einer Pumpe in den Mischbehälter gefördert. Diese Art der Zudosierung erfordert einerseits komplexe Einrichtungen und erlaubt zudem keine manuelle Zudosierung einzelner Komponenten. Dies ist jedoch wegen der erwähnten grossen Zahl von Chemikalien, die in Gerbereien zum Einsatz gelangen, von erheblicher Bedeutung.

Es stellt sich deshalb die Aufgabe, eine Chemikaliendosiereinrichtung für Gerbereien zu schaffen, die unter den erläuterten Gegebenheiten eine grösstmögliche Automatisierung der Chemikaliendosiervorgänge und zugleich manuelle Zudosierungen erlaubt und in eine gesamte Ablaufsteuerung für Gerbereien einbezogen werden kann.

Diese Aufgabe wird erfindungsgemäss durch eine Chemikaliendosiereinrichtung gelöst, bei welcher die Gewichtsmesszelle zur Messung des jeweiligen Totalgewichts am Mischbehälter angeordnet und mit einer zentralen Dosierungssteuerung verbunden ist, die über Steuerleitungen mit der jedem Mischbehälter zugeordneten Lokalsteuerung verbunden ist, wobei die zentrale Dosierungssteuerung eine Datenverarbeitungseinrichtung mit Speicher, mindestens einen Eingangsanschluss zum Empfang externer Daten aus einer Programmsteuerung, eine Eingabeeinheit zur manuellen Eingabe eines wählbaren oder zum Abrufen speicherbaren Dosierrezepts für eine Charge und eine Anzeigeeinheit für die Anzeige der einzelnen Komponenten der Charge aufweist, wobei der Messwert der Gewichtsmesszelle in der Datenverarbeitungseinrichtung der zentralen Dosierungssteuerung mit den rezeptgemässen Sollgewichten jeder zugegebenen Komponente vergleichbar ist, um daraus die Steuersignale für die Lokalsteuerung zu erzeugen, so dass die Komponenten aus den Chemikalientanks bzw. aus der Wasserleitung mittels der zentralen Dosierungssteuerung und der jeweiligen Lokalsteuerung in einer im Dosierrezept festgelegten Reihenfolge bis innerhalb einer setzbaren Gewichtstoleranzgrenze zugebbar sind und wobei ferner eine von der zentralen Dosierungssteuerung betätigte Gewichtsanzeige zur Anzeige des Soll- und des Istgewichts der jeweils zuzugebenden Komponente bei jedem Mischbehälter angeordnet ist.

Die erfindungsgemässe Anordnung kann über den Eingangsanschluss an eine Gerbereisteuerung angeschlossen werden, kann aber auch manuell mit einer Anzahl abrufbarer Dosierrezepte versehen werden oder kann schliesslich für einen individuell wählbaren Einzeldosiervorgang eingestellt werden. Die Anzeigeeinheit, auf welcher die Komponenten der jeweils dosierten Charge angezeigt werden, erlaubt im Zusammenspiel mit der Gewichtsanzeige die manuelle Zudosierung einzelner Komponenten, falls nötig.

Grundsätzlich sind zwei bevorzugte Aufbauvarianten möglich: Gemäss der einen kann jedem Gerbgefäss ein Wägebehälter mit Lokalsteuerung zugeordnet sein.

Diese Variante hat den Vorzug, dass die Gerbgefässen zuzugebenden Chemikalien im zugehörigen Wägebehälter abrufbar gelagert werden können, so dass im Verfahrensablauf keine Wartezeiten entstehen.

Andererseits kann einer Gruppe von Gerbgefässen lediglich ein gemeinsamer Wägebehälter mit Lokalsteuerung zugeordnet sein, wobei der Wägebehälter eine Auslassventilanordnung zur wahlweisen, gesteuerten Verbindung mit jeweils einem der Gerbgefässe der Gruppe aufweist. Bei diesem apparativ einfacheren Aufbau sind Wartezeiten bei der Belieferung der Gerbgefässe mit Chemikalien nicht auszuschliessen. Dies kann durch die Anbringung von je einem Vorbereitungsbehälter in der Zuleitung zu jedem Gerbgefäss für die Aufnahme und Zwischenlagerung der dosierten Chemikalien verhindert werden.

Nachfolgend werden zwei entsprechende Ausführungsbeispiele der Erfindung anhand der Figuren näher beschrieben. Darin zeigen:

Fig. 1 eine erste Ausführungsvariante der Chemikaliendosiereinrichtung in schematischer Darstellung;

Fig. 2 eine zweite Ausführungsvariante in entsprechender Darstellung, und

Fig. 3 eine Ansicht des Bedienungstableaus einer Dosierungssteuerung.

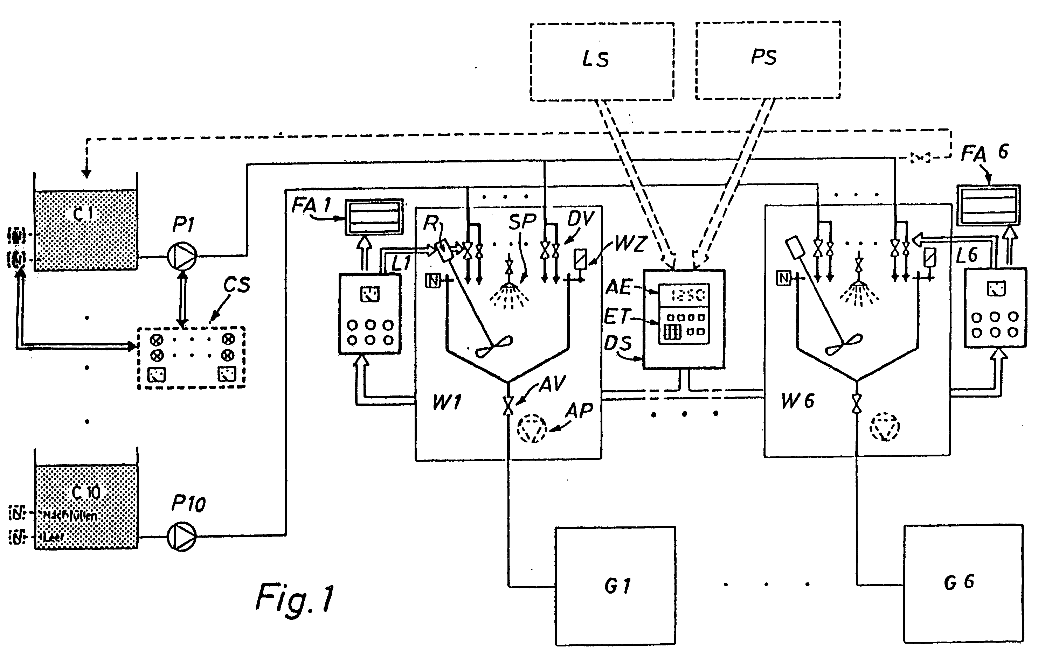

Die in Fig. 1 dargestellte, erste Ausführung der Chemikaliendosiereinrichtung ist derart ausgestaltet, dass jedem Gerbgefäss G1 bis G6 ein eigener Wägebehälter W1 bis W6 zugeordnet ist. Jeder Wägebehälter W1 bis W6 ist mit einer Lokalsteue-

rung L1 bis L6 ausgerüstet, über welche die Funktionen der am Wägebehälter angeordneten Organe beeinflusst werden. Die Lokalsteuerungen sind mit Schaltern zur Handauslösung der Funktionen des Wägebehälters versehen. Jeder Wägebehälter besitzt eine Dosierventilanordnung DV sowie mindestens ein Auslassventil AV, ein Rührwerk R, eine Spülanordnung SP, eine Wägezelle WZ und ein Niveaugeber N. Die Dosierventilanordnung DV ist im beschriebenen Ausführungsbeispiel mit bis zu 10 Chemikalientanks C1 bis C10, sowie einer Warm- und/oder Kaltwasserleitung (nicht gezeigt) verbunden. Pro Zuleitung sind zwei Ventile vorgesehen, nämlich ein Grobdosierventil zur Füllung des Wägebehälters in die Nähe des jeweiligen Sollgewichts und ein Feindosierventil für die Annäherung an das exakte Sollgewicht. Jeder Wägebehälter W1 bis W6 ist über sein Auslassventil AV und eine je nach den Niveauverhältnissen vorgesehene Auslasspumpe AP mit seinem Gerbgefäss verbunden.

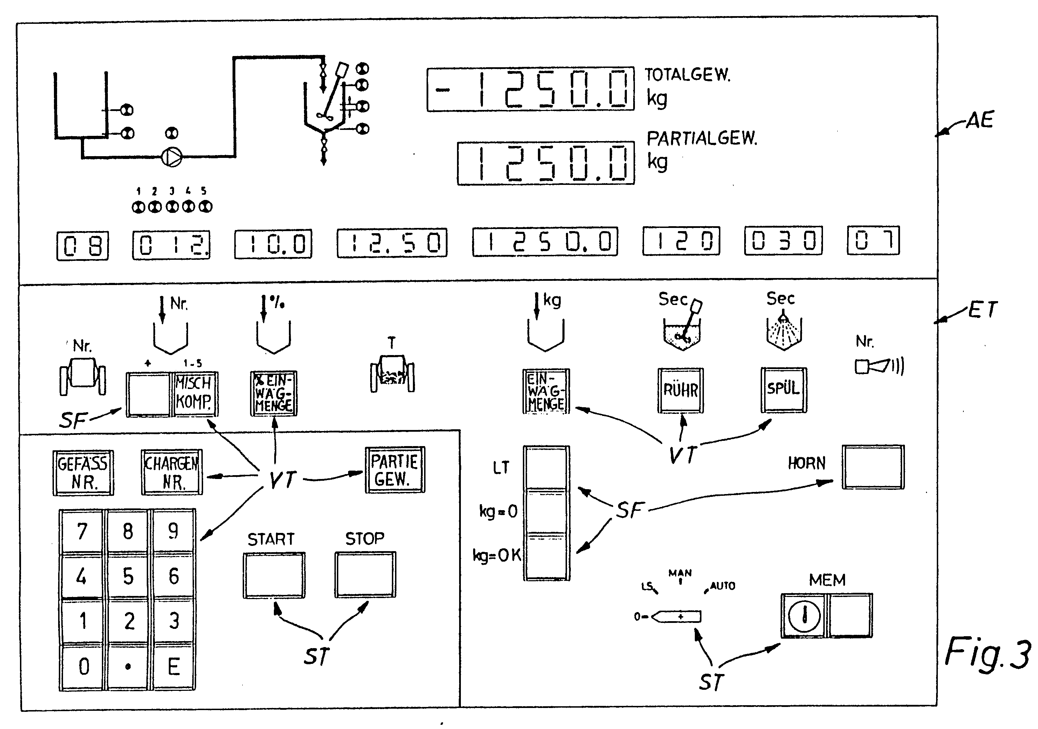

Die Lokalsteuerungen L1 bis L6 sind an eine gemeinsame Dosierungssteuerung DS angeschlossen. Die Dosierungssteuerung weist einen Rechner mit Eingabe- und Ausgabeschaltungen, einen AD-Wandler zur Wandlung der analogen Signale aus den Wägezellen WZ, eine Anzeigeeinheit AE sowie eine Eingabetastatur ET auf (vgl. Fig. 3). Die Eingabeschaltung besitzt insbesondere eine serielle Schnittstelle zum Empfang von Steuerbefehlen einer Gebereiprogrammsteuerung PS sowie Eingangsanschlüsse für den Empfang von Signalen einer Gebereilochkartensteuerung LS.

Den einzelnen Wägebehältern W1 bis W6 können Fernanzeigen FA1–FA6 zugeordnet sein, auf welchen mindestens Soll- und Ist-Gewichte angezeigt werden, wie noch näher erläutert wird, so dass es möglich ist, an Ort und Stelle von Hand in jeden Behälter zu dosieren.

Nach der Erläuterung des apparativen Aufbaus wird nun zunächst die Funktionsweise näher beschrieben. Hierzu wird auch auf Fig. 3 Bezug genommen, worin das Bedienungstableau dargestellt ist. Gemäss der geschilderten Struktur der Chemikaliendosiereinrichtung ist grundsätzlich ein manueller und ein automatischer Betrieb möglich, wobei jede dieser Betriebsarten mögliche Varianten aufweist.

Für den manuellen Betrieb ist bei der Dosierungssteuerung DS eine Eingabetastatur ET vorgesehen. Sie lässt sich in vier Funktionsgruppen unterteilen: Die Vorwahltasten VT, welche in Fig. 3 daran erkennbar sind, dass sie beschriftet sind, dienen zur Eingabe bzw. Korrektur spezieller Zahlenwerte, die für das jeweilige Dosierrezept charakteristisch sind. Oberhalb der jeweiligen Taste ist die zugehörige Anzeige auf der Anzeigeeinheit AE angeordnet. Bei der Eingabe ist jeweils zunächst eine, die entsprechende Funktion definierende Taste zu betätigen und daraufhin der gewünschte Zahlenwert einzugeben oder zu verändern, so dass die Steuerung den eingegebenen Zahlenwert zuordnen kann. Zunächst wird auf diese Weise die Gerbgefässnummer eingegeben. Danach kann die Chargennummer eingegeben werden, worauf aus dem Speicher das unter dieser Nummer gespeicherte Dosierrezept abgerufen wird. Auf der Anzeige können dabei die festgesetzten Werte für die einzelnen Komponenten nacheinander abgerufen werden. Die Charge der Nummer 0 erlaubt eine freie Eingabe der einzelnen Mischungskomponenten der Charge. Jeder als Mischkomponente zudosierbaren Chemikalie, von welcher bis zu 5 pro Charge gewählt werden können, ist eine feste Nummer von 1 bis 999 zugeordnet. Die Komponenten 1–5 werden mit der Taste MISCHKOMP. angewählt und erscheinen nacheinander auf der darüber liegenden Anzeige, wobei die entsprechende Lampe 1 bis 5 aufleuchtet. Mit der Taste %-EINWÄGMENGE wird der prozentuale Anteil jeder Mischkomponente vom Partiegewicht (Gewicht des Gerbguts) bzw. mit der Taste EINWÄGMENGE deren absolutes Gewicht eingegeben bzw. abgerufen. Falls die für die gewählte Charge gespeicherten Werte dieser Grössen verändert werden sollen, kann dies nach Anwählen mittels der entsprechenden Vorwahltaste geschehen. Mittels der Tasten RÜHR und SPÜL können schliesslich die Rühr- und Spüldauern bestimmt werden.

Die zweite Funktionsgruppe wird durch die Steuertasten ST gebildet. Dies sind die START- und STOP-Tasten. Mittels der START-Taste wird ein manuell eingegebener Dosiervorgang gestartet. Dieser beginnt mit der automatischen Tarierung des Wägebehälters und der nachfolgenden Zudosierung der einzelnen Komponenten der Charge gemäss eingegebenem Dosierrezept. Mit der STOP-Taste kann der laufende Dosiervorgang unterbrochen werden, welcher mit der START-Taste wieder aufgenommen werden kann.

Die dritte Funktionsgruppe sind sog. Sonderfunktionstasten SF. Mittels der Taste « + » kann die Anzeige der einzelnen Mischkomponenten weitergeschaltet werden. Beim Betätigen derselben erscheinen jeweils die Angaben zur nächstfolgenden Komponente. Die Taste «kg = O» löst einen Nullabgleich der Waage aus. Die Taste «kg = OK» bewirkt bei Betätigung, dass das eingewogene Gewicht einer Komponente ungeachtet einer Abweichung vom Sollwert akzeptiert wird, was insbesondere bei manueller Dosierung einzelner Komponenten von Bedeutung sein kann. Mittels der Taste «LT» kann für jede Komponente das Gewicht in Volumen (lt) umgerechnet werden. Hierzu sind die spezifischen Gewichte der Komponenten fest gespeichert. Dies ist insbesondere bei Ausfall der Wägefunktion von Bedeutung, indem mit Hilfe eines am Wägebehälter vorgesehenen Standrohrs weiterhin manuell dosiert werden kann. Die Taste «HORN» dient zum Abstellen eines Alarmhornes. Dies tritt in Funktion, falls die Dosierungssteuerung einen Fehlerfall registriert, insbesondere bei nicht erreichtem Sollwert einer automatisch zudosierten Komponente, beim Überfüllen des Wägebehälters, was durch den Niveaugeber N gemeldet wird etc.

Die vierte Funktionsgruppe schliesslich wird durch die Serviceschalter ST gebildet. Deren Funktion kann erst nach Betätigen eines Schlüsselschalters erfolgen. Mit der Taste MEM kann der Speichervorgang für die mittels der Vorwahltasten eingegebenen Grössen ausgelöst werden. Auf diese Weise kann eine Anzahl Dosierrezepte unter bestimmten Chargennummern eingegeben und abgespeichert werden, wie bereits erläutert. Die gespeicherten Werte werden durch die im Einzelfall angewählten Abweichungen einzelner Grössen nicht verändert. Mittels eines Drehschalters kann schliesslich zwischen den einzelnen Betriebsarten der manuellen Bedienung, wie beschrieben, der Lochkartensteuerung LS und der Programmsteuerung AUTO gewählt werden.

Letztere gehören zum sog. automatischen Betrieb, welcher beim Vorliegen einer Gerbeisteuerung, d.h. einer Gesamtsteuerung für die verschiedenen Funktionen mehrerer Gerbgefässe anwendbar ist. Bei Programmsteuerung wird der Dosierungssteuerung das Dosiertelegramm über eine serielle Schnittstelle von einem zentralen Rechner jedesmal übermittelt. Dieses enthält im wesentlichen die bereits genannten Angaben zur Dosierung. Für Lochkartensteuerungen weist die Dosierungssteuerung Anschlüsse auf, über welche die Nummern der eingespeicherten Chargen (vgl. vorn) ausgewählt werden. Dies setzt, anders als bei Programmsteuerung, die vorgängige manuelle Eingabe der Dosierrezepte in die Dosierungssteuerung voraus.

Die Dosierung läuft in allen Fällen grundsätzlich gleich ab, indem die automatisch zudosierbaren Komponenten aus den Chemikalientanks C1 bis C10 bzw. der Wasserleitungen mittels der Dosierungssteuerung DS und der jeweiligen Lokalsteuerung L1 bis L6 bis innerhalb einer setzbaren Gewichtstoleranzgrenze zugegeben werden, und zwar in der Reihenfolge der im Dosierrezept enthaltenen Komponenten. Eine Chemikalientanksteuerung CS, welche ihre Steuersignale ebenfalls aus der Dosierungssteuerung erhält, steuert die Funktion der allenfalls nötigen Pumpen P1–P10 und überwacht das Niveau der Chemikalien in den Tanks, mit allfälliger Fehlermeldung an die Dosierungssteuerung.

Muss eine der Komponenten von Hand zudosiert werden, so wird dies durch Aufblinken der Anzeige kenntlich gemacht. Die zuzugebende Sollmenge der Komponente ist auf der Anzeige oberhalb der Taste EINWÄGMENGE angezeigt. Das Ist-Gewicht der zugegebenen Menge erscheint auf der Partialgewichtsanzeige. Ist die Toleranzgrenze erreicht, wird automatisch auf die nächste Komponente geschaltet, die wiederum entweder automatisch oder manuell zudosiert wird. Um die manuelle Zudosierung bei den verschiedenen Wägebehältern zu erlauben, weist jeder eine eigene Fernanzeige FA1 bis FA6 auf. Darauf erscheint das Totalgewicht, das Partial-Sollgewicht der jeweiligen Komponente und das Partial-Istgewicht derselben. Ist der Dosierungsvorgang abgeschlossen, erfolgt die Ausgabe an das entsprechende Gerbgefäss G1 bis G6.

Bei Programm- bzw. Lochkartensteuerung kann die Ausgabe durch Signale aus diesen Steuerungen erfolgen, so dass eine Abstimmung mit dem ablaufenden Gerbprozess erfolgt. Die anhand von Fig. 1 beschriebene Einrichtung hat dabei den Vorteil, dass die fertig dosierten Chargen im Wägebehälter zwischengespeichert werden können, ohne dass dadurch die Dosiereinrichtung blockiert wird.

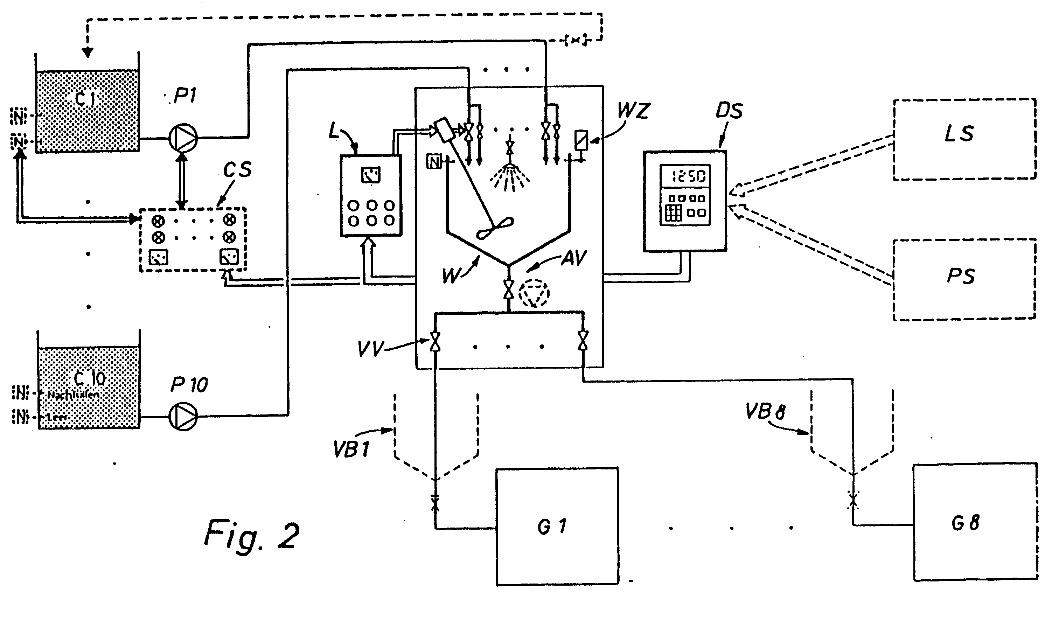

Dies ist nicht der Fall bei der apparativ weniger aufwendigen Anlage gemäss Fig. 2. Diese ist grundsätzlich in gleicher Weise aufgebaut, wie diejenige von Fig. 1, weshalb hier auf eine Wiederholung der Beschreibung gleicher Teile verzichtet wird. Sie unterscheidet sich darin, dass für mehrere Gerbgefässe G1 bis G8 lediglich ein Wägebehälter W mit Lokalsteuerung L vorgesehen ist. Um die gemischten Chargen den einzelnen Gerbgefässen zuzuführen, ist deshalb eine Verteilventilanordnung VV vorgesehen. Da die einzelnen Schritte eines Gerbprozesses in der Regel lange dauern im Vergleich mit der Dosierzeit, können bei geeigneter Arbeitsorganisation Wartezeiten dennoch klein gehalten werden. Soll dies jedoch vermieden werden, kann jedem oder bestimmten Gerbgefässen G1 bis G8 Vorbereitungsbehälter VB1 bis VB8 zugeordnet werden, worin die dosierte Charge bis zum Gebrauch zwischengelagert werden kann. Damit kann der Dosiervorgang zeitlich weitgehend unabhängig vom Ablauf der Gerbverfahren in den Gefässen erfolgen, was eine optimale Ausnutzung der Dosierungseinrichtung erlaubt. Da die Dosierungssteuerung DS bei dieser Anlage im Bereich des Wägebehälters W angeordnet werden kann, sind Fernanzeigen überflüssig.

Die beschriebene Chemikaliendosiereinrichtung für Gerbereien hat den Vorteil der leichten Anpassbarkeit an bestehende Gerbereieinrichtungen, insbesondere die bestehenden Chemikalienlager, indem die in geeigneter Form zur Verfügung stehenden Chemikalien automatisch und die restlichen von Hand zudosierbar sind. Es kann damit unter den gegebenen Verhältnissen die grösstmögliche Automatisierung erzielt werden. Die Möglichkeit der manuellen Bedienung erlaubt die für Gerbverfahren nötige Flexibilität und Anpassung an die ständig wechselnden Eigenschaften des Gerbguts, indem entweder in gespeicherten Dosierrezepten einzelne Komponenten manuell geändert oder ad hoc Dosierrezepte eingegeben werden können.

**Patentansprüche**

1. Gewichtsgesteuerte Chemikaliendosiereinrichtung für Gerbereien zum Anschluss an mindestens ein Gerbgefäss (G), mit mindestens einem Mischbehälter (W), sowie einer Gewichtsmesszelle (WZ), Dosierventilen (DV) für den Anschluss von Zufuhrleitungen aus Chemikalientanks (C) bzw. für Wasser und mindestens einem Auslassventil (AV), deren Funktionen mittels einer jedem Wägebehälter zugeordneten Lokalsteuerung (L) betätigbar sind, dadurch gekennzeichnet, dass die Gewichtsmesszelle (WZ) zur Messung des jeweiligen Totalgewichts am Mischbehälter angeordnet und mit einer zentralen Dosierungssteuerung (DS) verbunden ist, die über Steuerleitungen mit der jedem Mischbehälter zugeordneten Lokalsteuerung (L) verbunden ist, wobei die zentrale Dosierungssteuerung (DS) eine Datenverarbeitungseinrichtung mit Speicher, mindestens einen Eingangsanschluss zum Empfang externer Daten aus einer Programmsteuerung, eine Eingabeeinheit (ET) zur manuellen Eingabe eines wählbaren oder zum Abrufen speicherbaren Dosierrezepts für eine Charge und eine Anzeigeeinheit (AE) für die Anzeige der einzelnen Komponenten der Charge aufweist, wobei der Messwert der Gewichtsmesszelle in der Datenverarbeitungseinrichtung der zentralen Dosierungssteuerung (DS) mit den rezeptgemässen Sollgewichten jeder zugegebenen Komponente vergleichbar ist, um daraus die Steuersignale für die Lokalsteuerung zu erzeugen, so dass die Komponenten aus den Chemikalientanks (C) bzw. aus der Wasserleitung mittels der zentralen Dosierungssteuerung (DS) und der jeweiligen Lokalsteuerung (L) in einer im Dosierrezept festgelegten Reihenfolge bis innerhalb einer setzbaren Gewichtstoleranzgrenze zugebbar sind, und wobei ferner eine von der zentralen Dosierungssteuerung (DS) betätigte Gewichtsanzeige zur Anzeige des Soll- und des Istgewichts der jeweils zuzugebenden Komponente bei jedem Mischbehälter (W) angeordnet ist.

2. Chemikaliendosiereinrichtung für Gerbereien nach Anspruch 1 für eine Gruppe von Gerbgefässen (G1–G6), dadurch gekennzeichnet, dass jedem Gerbgefäss (G1–G6) ein Mischbehälter (W1–W6) mit Lokalsteuerung (L1–L6) zugeordnet ist (Fig. 1).

3. Chemikaliendosiereinrichtung für Gerbereien nach Anspruch 1, für eine Gruppe von Gerbgefässen (G1–G8), dadurch gekennzeichnet, dass ein gemeinsamer Mischbehälter (W) mit Lokalsteuerung (L) vorgesehen ist, welcher der Gruppe von Gerbgefässen (G1–G8) gemeinsam ist, wobei der Mischbehälter eine Auslassventilanordnung (VV) zur wahlweisen, gesteuerten Verbindung mit jeweils einem der Gerbgefässe der Gruppe besitzt (Fig. 2).

4. Chemikaliendosiereinrichtung für Gerbereien nach Anspruch 3, dadurch gekennzeichnet, dass in die Zuleitungen zu den Gerbgefässen (G1–G8) je ein Vorbereitungsbehälter (VB1–VB8) zur Aufnahme und Zwischenlagerung der dosierten Chemikalien vorgesehen ist.

5. Chemikaliendosiereinrichtung für Gerbereien nach einem der vorangehenden Ansprüche, dadurch gekennzeichnet, dass die Anzeigeeinheit (AE) der zentralen Dosierungssteuerung (DS) ein Anzeigefeld aufweist, das mindestens zur Anzeige jeweils einer zuzudosierenden Komponente einer Charge und ihrem prozentualen Anteil am Gewicht des Gerbgutes ausgebildet ist, wobei alle Komponenten einer Charge nacheinander in der Reihenfolge ihrer Zugabe auf der Anzeige abrufbar sind.

6. Chemikaliendosiereinrichtung für Gerbereien nach Anspruch 4, dadurch gekennzeichnet, dass die Gewichtsanzeige (FA1–FA6) je ein Feld für die Sollgewicht- und Istgewichtsanzeige der jeweils dosierten Komponente sowie des Totalgewichts aufweist.

7. Chemikaliendosiereinrichtung für Gerbereien nach einem der vorangehenden Ansprüche, dadurch gekennzeichnet, dass die zentrale Dosierungssteuerung (DS) zwischen manueller Bedienung und automatischem Betrieb umschaltbar ist, wobei im automatischen Betrieb über den Eingangsanschluss Daten zur Bestimmung und Auslösung von Dosiervorgängen eingebbar sind.

8. Chemikaliendosiereinrichtung für Gerbereien nach einem der vorangehenden Ansprüche, dadurch gekennzeichnet, dass die Eingabeeinheit (ET) Vorwahltasten (VT) für die Eingabe bzw. Änderung der Komponenten einer Charge nach Zusammensetzung und Gewicht aufweist.

9. Chemikaliendosiereinrichtung für Gerbereien nach einem der vorangehenden Ansprüche, dadurch gekennzeichnet, dass jeder Wägebehälter (W1–W6) ferner ein Rührwerk (R) sowie eine Spüleinrichtung (SP) besitzt, deren Betätigung über die zentrale Dosierungssteuerung (DS) auslösbar ist.

10. Chemikaliendosiereinrichtung für Gerbereien nach einem der vorangehenden Ansprüche, dadurch gekennzeichnet, dass jede Lokalsteuerung (L1–L6) mit Schaltern zur Handauslösung der Funktionen des Wägebehälters (W1–W6) unabhängig von der zentralen Dosierungssteuerung (DS) versehen ist.

**Claims**

1. Weight controlled system for dosing chemicals for tanneries for connection to at least one tanning vessel (G), with at least one mixing vessel (W), as well as a weight measuring cell (WZ), dosing valves (DV) for the connection of feed lines from containers (C) of chemicals and water, respectively, and at least one discharge valve (AV), the function thereof being operable by means of a local control (L) allocated to every weighing vessel, characterized in that the weight measuring cell (WZ) for the measuring of a respective total weight is arranged at the mixing vessel and connected to a central dosing control (DS), which is connected via control lines to the local control (L) allocated to every mixing vessel, which central dosing control (DS) includes a data processing device with a storage, at least one input terminal for receipt of external data from a program control, an input unit (ET) for a manual input of a selectable or for a recall of a storable dosing recipe for one charge and a display unit (AE) for the display of the individual components of the charge, whereby the measured value of the weight measuring cell in the data processing device of the central dosing control (DS) is comparable with the design weights according to the recipes of each added component such to generate therefrom control signals for the local control, such that the components are addable from the containers (C) of chemicals or water line, respectively, by means of the central dosing control (DS) and the respective local control (L) in a sequence set in the dosing recipe unto within a selectable weight tolerance limit, and whereby a weight display, operated by the central dosing control (DS) for the display of the design and actual weight of the respective fed component, is arranged at every mixing vessel (W).

2. System for dosing chemicals for tanneries according to claim 1 for a series of tanning vessels (G1–G6), characterized in that one mixing vessel (W1–W6) with local control (L1–L6) is allocated to each tanning vessel (G1–G6) (Fig. 1).

3. System for dosing chemicals for tanneries according to claim 1 for a series of tanning vessels (G1–G8), characterized in that one common mixing vessel (W) with local control (L) is provided, which is common to the series of tanning vessels (G1–G8), which mixing vessel (W) comprises a discharge valve system (VV) for a selectable controlled connection to one respective of the tanning vessels of the series (Fig. 2).

4. System for dosing chemicals for tanneries according to claim 3, characterized in that one preparing vessel (VB1–VB8) for the receipt and temporary storage of the dosed chemicals each is provided in each feed line to the tanning vessels (G1–G8).

5. System for dosing chemicals for tanneries according to one of the preceding claims, characterized in that the display unit (AE) of the central dosing control (DS) comprises a display panel designed at least for the display of one respective component of a charge to be dosed and its portion in per cent of the weight of the tanning stock, whereby all components of a charge can be called up on the display subsequently in the sequence of their feed.

6. System for dosing chemicals for tanneries according to claim 4, characterized in that the weight display (FA1–FA6) comprises one panel each for the design weight and actual weight display of a respective dosed component and of the total weight as well.

7. System for dosing chemicals for tanneries according to one of the preceding claims, characterized in that the central dosing control (DS) is switchable between manual and automatic mode, whereby data for setting and triggering of dosing procedures are inputable in the automatic mode via the infeed terminal.

8. System for dosing chemicals for tanneries according to one of the preceding claims, characterized in that the input unit (ET) comprises preselecting keys for the input or changing, respectively, of the components of a charge regarding composition and weight.

9. System for dosing chemicals for tanneries according to one of the preceding claims, characterized in that each weighing vessel (W1–W6) comprises further an agitator (R) and a flushing device (SP), the operation of which is triggerable via the central dosing control (DS).

10. System for dosing chemicals for tanneries according to one of the preceding claims, characterized in that each local control (L1–L6) is provided with switches for a manual triggering of the functions of the weighing vessel (W1–W6), independently from the central dosing control (DS).

**Revendications**

1. Dispositif pour tannerie, pour le dosage gravimétrique de produits chimiques, agencé pour être accouplé à au moins un récipient de tannage (G) et comportant au moins un récipient mélangeur (W) ainsi qu'un organe de pesage (WZ), des valves de dosage (DV) prévues pour l'accouplement de conduites d'alimentation en eau ou provenant de réservoirs pour produits chimiques (C), ainsi qu'au moins une valve de sortie (AV), apte à être commandée par un circuit local de commande (L) assigné à chaque récipient mélangeur, caractérisé en ce que pour la mesure de chaque poids total l'organe de pesage (WZ) est monté sur le récipient mélangeur et connecté à un circuit central de dosage (DS), lui-même connecté par des lignes de commande avec le circuit local (L) associé à chaque récipient mélangeur, le circuit central de dosage (DS) comportant un circuit ordinateur avec une mémoire, au moins une entrée pour recevoir des données externes issues d'un circuit de programmation, une unité d'entrée (ET) pour l'introduction manuelle d'un dosage désiré ou pour choisir une formule de dosage mémorisée pour une charge et comportant une unité d'affichage (AE) pour afficher séparément les composants de la charge, le poids déterminé par l'organe de pesage étant comparable, dans le circuit ordinateur du circuit central de dosage (DS), avec les valeurs de consigne du poids de chaque composant telles qu'elles résultent du dosage choisi, pour produire des signaux pour le circuit local de commande de manière à ce que les composants issus des réservoirs (C) pour produits chimiques, respectivement de la conduite d'eau, puissent être additionnés, dans un ordre déterminé par la formule de dosage et à l'intérieur d'un seuil de tolérance de poids, au moyen du circuit central de dosage (DS) et du circuit local concerné (L), un affichage de poids actionné par ce circuit central pour afficher le poids de consigne et le poids effectif du composant à additionner à un instant donné étant associé à chaque enceinte de mélange (W).

2. Dispositif selon la revendication 1 pour un groupe de récipients de tannage (G1–G6), caractérisé en ce qu'à chaque récipient (G1–G6) est associé un récipient mélangeur (W1–W6) pourvu d'un circuit local de commande (L1–L6) (Fig. 1).

3. Dispositif de dosage de produits chimiques pour tannerie selon la revendication 1, pour un groupe de récipients de tannage (G1–G8), caractérisé en ce qu'un récipient mélangeur commun (W) est muni d'une unité locale de commande (L) associée au groupe (G1–G8), le récipient mélangeur comportant des moyens (VV) formant valve de sortie et agencés pour être connecté au choix avec l'un des récipients de tannage du groupe (Fig. 2).

4. Dispositif de dosage de produits chimiques pour tannerie selon la revendication 3, caractérisé en ce que chaque conduite d'alimentation pour un récipient de tannage (G1–G8) comporte un récipient de préparation (VB1–VB8) pour recevoir et stocker provisoirement les produits chimiques dosés.

5. Dispositif de dosage de produits chimiques pour tannerie selon une des revendications précédentes, caractérisé en ce que l'unité d'affichage (WE) du circuit central de dosage (DS) comporte un cadre d'affichage agencé pour afficher au moins un composant devant être ajouté à une charge, ainsi que son pourcentage en poids de la masse à tanner, tous les composants d'une charge pouvant être affichés successivement dans l'ordre dans lequel ils sont ajoutés.

6. Dispositif de dosage de produits chimiques pour tannerie selon la revendication 4, caractérisé en ce que l'unité d'affichage comporte un cadre distinct pour l'affiche de la valeur de consigne du poids du composant à doser, de la valeur effective de ce poids, et pour l'affichage du poids total.

7. Dispositif de dosage de produits chimiques pour tannerie selon une des revendications précédentes, caractérisé en ce que le circuit central de dosage (DS) est agencé pour fonctionner en mode automatique et en mode manuel, des données pour la détermination et le déclenchement des processus de dosage pouvant y être introduites par son entrée lorsqu'il fonctionne en mode automatique.

8. Dispositif de dosage de produits chimiques pour tannerie selon une des revendications précédentes, caractérisé en ce que l'unité d'entrée (ET) comporte des touches de présélection (VT) pour l'introduction, respectivement la modification, du poids et de la composition des composants d'une charge.

9. Dispositif de dosage de produits chimiques pour tannerie selon une des revendications précédentes, caractérisé en ce que chaque récipient mélangeur (W1–W6) comprend un mélangeur (R) et un dispositif de rinçage (SP) pouvant être activé par le circuit central de dosage (DS).

10. Dispositif de dosage de produits chimiques pour tannerie selon une des revendications précédentes, caractérisé en ce que chaque circuit local de commande (L1–L6) comporte des organes pour commander manuellement le fonctionnement des récipients mélangeurs (W1–W6), indépendamment du circuit central de dosage.

Fig.1

0 134 287

Fig. 2

0 134 287

Fig.3